# EUROPEAN PATENT APPLICATION

(11) **EP 3 203 061 A1**
(43) Date of publication of application: **09.08.2017**
(21) Application number: 16290028.6
(22) Date of filing: 05.02.2016
(51) Int. Cl.: F03B 3/12, F03B 11/04

(54) **BLADE FOR SHROUDED RUNNER AND SHROUDED RUNNER COMPRISING SAID BLADE**

(71) Applicant: GE Renewable Technologies, 38100 Grenoble (FR)
(72) Inventor: Toussaint, Kristopher, Sorel-Tracy, J3R 5P9 (CA); Bornard, Laurent, Sorel-Tracy, J3R 5P9 (CA); Sabourin, Michel, Sorel-Tracy, J3R 5P9 (CA)
(74) Representative: Brannen, Joseph Waclaw

(57) **Abstract**

The present invention is related to a shrouded Kaplan and shrouded propeller-type hydraulic turbine. More in particular, the present invention relates to a blade for such shrouded turbines. The basic idea underlying the present invention is to add a winglet on the pressure side of a blade to eliminate a large gap between the blade and the shroud, in order to improve performances, decrease marginal cavitation and improve fish friendliness.

## Description

### TECHNICAL FIELD

The present invention is related to a shrouded Kaplan or propeller hydraulic turbine and more generally to runners for hydraulic turbines. More in particular, the present invention relates to a blade for such shrouded turbines.

### BACKGROUND

As well known, Kaplan and propeller runner blades may extend much lower than the runner shroud, this being mostly due to hydraulic constraints considerations and limited available space. As a result of this, an enlargement of the blade tip gap near the trailing edge is thus created. Large tip gaps are responsible for increased leakage flow which causes a decrease in efficiency, increased marginal cavitation and increased fish mortality.
For turbines requiring a blade length which is longer, at highest opening, than the available space allowed by the shroud space, the nature and size of the tip gap may be changed by designing blades having a curved trailing edge profile.
A curved trailing edge is the result of decreasing the blade height locally at the shroud, while maintaining a large height of blade at smaller radius, where it is required.
In most cases, this solution proves to be insufficient because the required blade length results in a nearly vertical trailing edge, leading to increased leakage flow and the formation of a blade tip vortex, similar to the one experienced in a standard-type gap.

### SUMMARY OF THE INVENTION

It is an object of the present invention to solve the aforementioned technical problems by providing a blade for a shrouded propeller or Kaplan runner as substantially defined in independent claim 1.

It is a further object of the present invention to provide a shrouded propeller or Kaplan runner as substantially defined in dependent claim 6.

It is a further object of the invention to provide a method for rehabilitating an existing shrouded propeller or Kaplan runner as substantially defined in independent claim 7.

According to an aspect of the invention, this object is obtained by a blade for a shrouded runner configured to rotate within an external shroud annularly located around the runner, wherein the blade comprises a winglet located on the blade pressure side and extending upwards.

According to a preferred aspect of the invention, the winglet is located in the proximity of a trailing edge of the blade.

According to a preferred aspect of the invention, the winglet has a hydrodynamic profile.

According to a preferred aspect of the invention, the winglet has a rounded leading edge.

According to a preferred aspect of the invention, the winglet has a fillet junction with the blade.

According to a further aspect of the invention, it is provided a method for rehabilitating a shrouded runner, wherein the runner comprises one or more blades configured to rotate within a shroud annularly located around the runner, wherein the method includes the step of providing one or each blade with a winglet located on the blade pressure side and extending upwards.

According to a preferred aspect of the invention, wherein the winglet is connected to the blade by welding.

According to a preferred aspect of the invention, the connection between the blade and the winglet is performed such to establish a fillet junction along a welding portion.
The basic idea underlying the present invention is to add a winglet on the pressure side of a blade to eliminate a large gap between the blade and the shroud, in order to improve performances, decrease marginal cavitation and improve fish friendliness.
Blade tip winglets, or lips, are widely used in axial hydro-turbines, but they are typically placed on suction side, around the mid-blade and are generally limited in height compared to present invention.
Moreover, winglets are often employed on blade tips in aerospace (wings and propeller blades) and wind turbines to counter blade tips vortices, but these applications do not involve a shroud. Also, they are principally all on suction side or on both pressure and suction sides.
Winglets have also been employed in unshrouded open-water propellers for ships.
As it will be clear from a detailed description of an exemplary and non-limiting embodiment, the present invention consists of a winglet, or fin, on the pressure side of a blade extending upwards to suppress large gap between blade and shroud.
By maintaining only a functional gap in the proximity of the blade trailing edge, marginal cavitation and losses are greatly decreased.
The present invention is applicable to propellers and particularly Kaplan runners. Preferably, for the latters, the winglets are spherical in order to maintain functional gap at all blade openings. This is analogous to an extension of the spherical shroud applied locally on runner blades.
Advantageously, this solution provides the desired hydraulic blade length, without introducing large tip gaps, regardless of the available shroud height.
The present invention can contribute to decreasing losses and cavitation associated to the leakage flow and tip vortex.
Furthermore, a minimum gap requirement for fish friendly turbines is ensured. In fact, large tip gaps have been associated with fish injuries; however fish friendly turbines also require increased pressures that are obtained with larger chord lengths. Similarly, larger chord lengths may also be required to avoid cavitation when increasing the power of turbine with a runner replacement.
According to a further aspect of the invention, it is also provided a method for rehabilitating axial hydraulic turbines, specifically where fish friendliness is a main concern.

### BRIEF DESCRIPTION OF THE DRAWINGS

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:

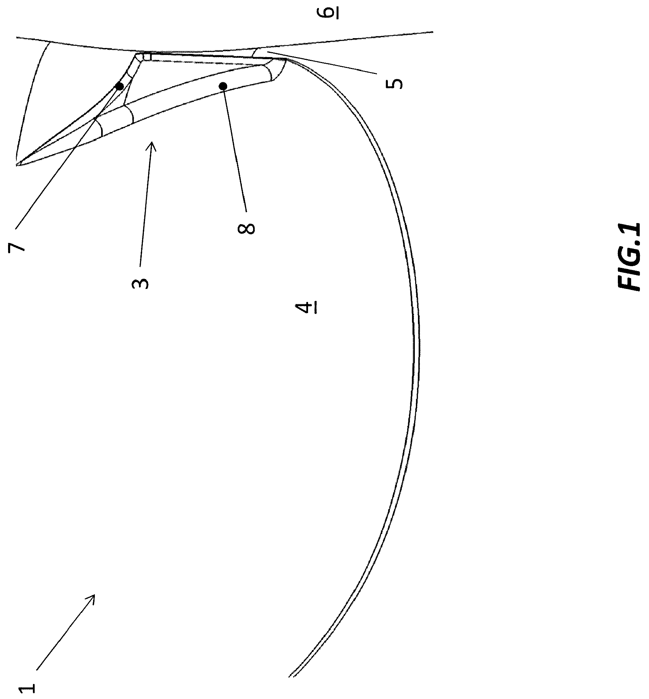

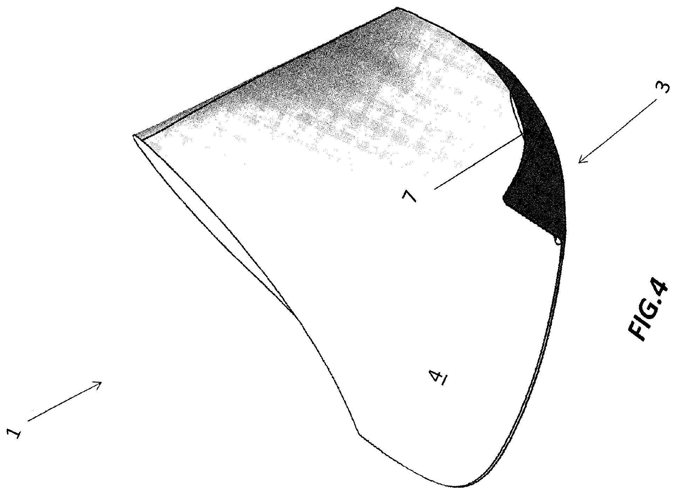

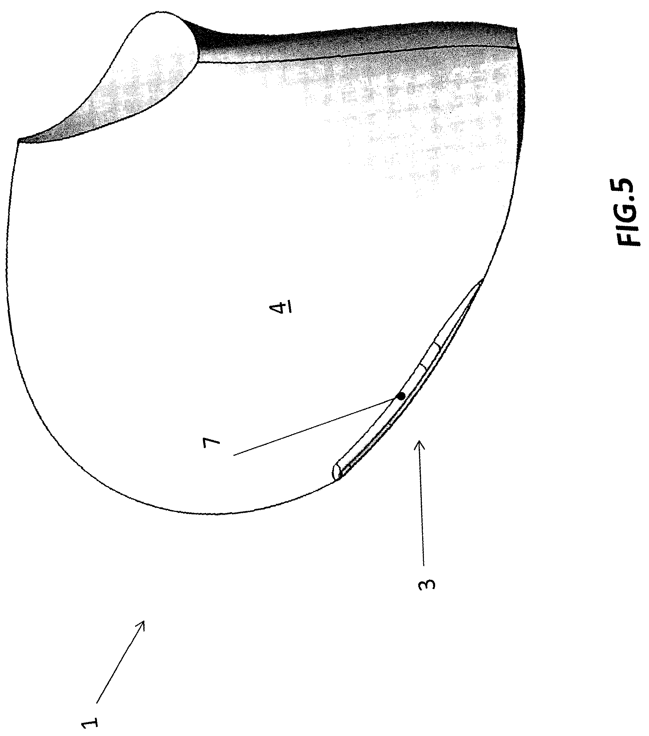

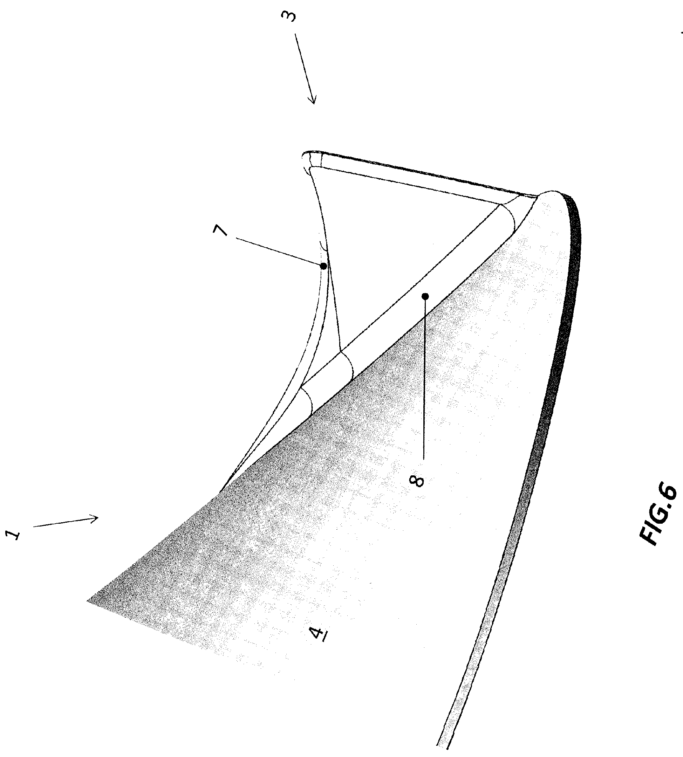

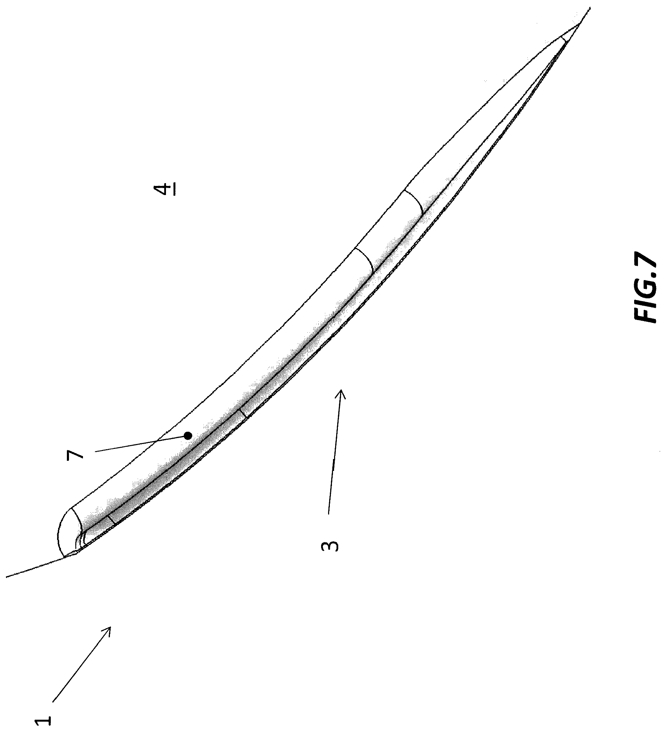

Figure 1-7 show a blade comprising a winglet according to the present invention in different perspective views.

### DETAILED DESCRIPTION OF THE INVENTION

With reference to figure 1, it is schematically shown a terminal portion of a blade of a runner (not shown) according to the present invention, generally indicated by numeral reference 1. The blade 1 is configured to rotate within an external shroud, schematically indicated with numeral reference 6, annularly located around the blade 1. As shown in the figure, blade 1 comprises a winglet 3 located on a blade pressure side 4 and extending upwards. The extent of the winglet 3 towards the shroud 6 is advantageously selected in such a way to provide a minimal gap 5 between a summit of the winglet 3 and the shroud, such to ensure tolerance necessary for the rotation of the blade within the volume delimited by the surrounding shroud.
According to a preferred embodiment, winglet 3 has a rounded leading edge 7, and comprises a fillet junction 8 with the blade 1 along a connecting portion, to avoid stress concentrations, which might lead to breakage during prolonged usage.
Advantageously, leading edge 7 is hydraulically smooth to avoid local flow accelerations.

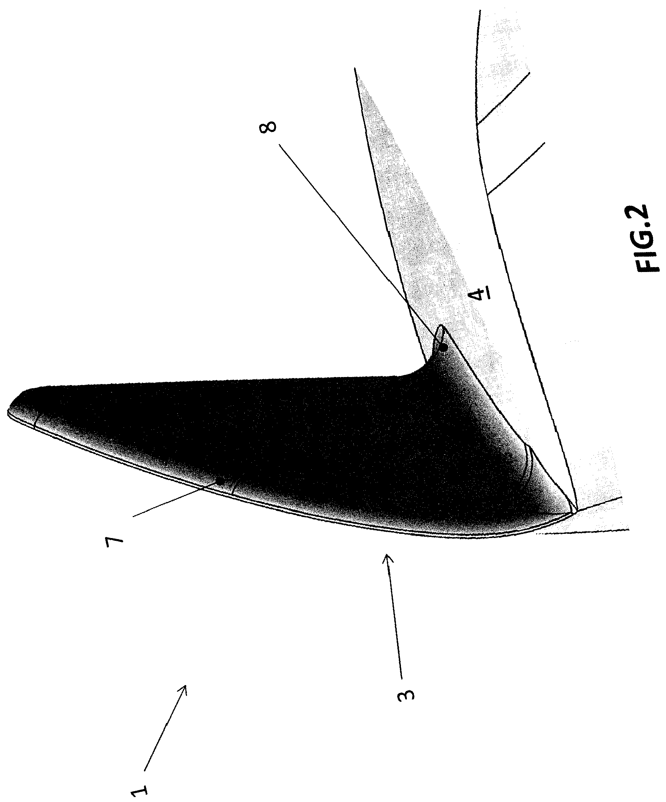

With reference to next figure 2, blade 1 including the winglet 3 is more clearly shown in a perspective view. Advantageously, as it may be appreciated from this view, winglet 3 has a hydrodynamic profile and is located in the proximity of a trailing edge of the blade.

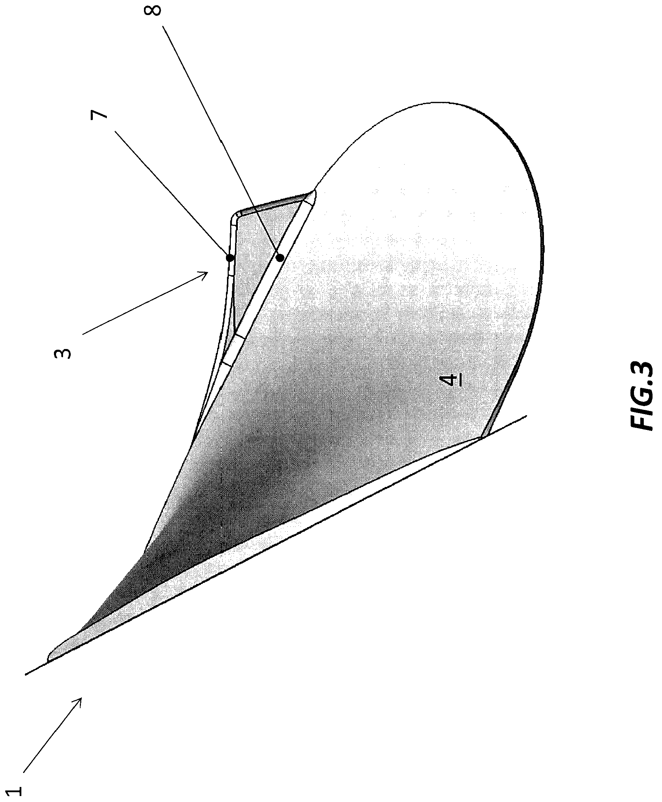

The blade 1 according to the invention is also pictured, in different perspective views, in following figures 3-7.
The height of the winglet 3 is advantageously designed such to effectively reduce the existing gap 5 between blade and shroud, when compared to known installations having blades of similar length. Moreover, the winglet is provided with a sufficient thickness in order to ensure mechanical integrity.

The winglet 3 may also be provided to an existing shrouded runner, in order to rehabilitate the turbine and to improve its performances.
The rehabilitating method of a shrouded runner according to the present invention includes providing the blades of the runner with the winglet 3 extending upwards and located on the blade pressure side 4.
The connection between the winglet and the existing blade may be carried out with a welding operation. In particular, the welding may be operated such to create the fillet junction 8 along a welding portion.
According to an alternative embodiment, the method for rehabilitating a shrouded runner may include the winglet in the casting of the blade, in order to advantageously obtain a blade comprising the winglet as a single-piece.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. Blade (1) for a shrouded runner, the blade being configured to rotate within an external shroud (6) annularly located around the runner, ***characterised in that*** it comprises a winglet (3) extending upwards and located on the blade pressure side (4)

2. Blade (1) according to the preceding claim, wherein said winglet (3) is located in the proximity of a trailing edge of said blade (1).

3. Blade (1) according to claims 1 or 2, wherein the winglet (3) has a hydrodynamic profile.

4. Blade (1) according to the preceding claim, wherein the winglet has a rounded leading edge (7).

5. Blade (1) according to any of the preceding claims, wherein said winglet (3) has a fillet junction (8) with the blade (1).

6. Shrouded runner, ***characterised in that*** it comprises a blade (3) according to any of the preceding claims.

7. Method for rehabilitating a shrouded runner, the runner comprising one or more blades (1) configured to rotate within a shroud annularly located around the runner, the method being ***characterised in that*** it comprises the step of providing said one or more blades (1) with a winglet (3) located on the blade pressure side (4) and extending upwards.

8. Method according to the preceding claim, wherein said winglet is connected to said blade (1) by welding.

9. Method according to the preceding claim, wherein said connection between blade and winglet is performed such to establish a fillet junction along a welding portion.

10. Method for rehabilitating a shrouded runner according to claim 7, wherein said winglet (3) is included in casting of said blade (1).
